# EUROPEAN PATENT APPLICATION

(11) **EP 4 496 371 A1**
(43) Date of publication of application: **22.01.2025**
(21) Application number: 23769424.5
(22) Date of filing: 05.01.2023
(51) Int. Cl.: H04W 24/02

(54) **NETWORK NODE, COMMUNICATION METHOD, AND STORAGE MEDIUM**

(30) Priority: 18.03.2022 CN 202210272474
(71) Applicant: ZTE Corporation, Shenzhen, Guangdong 518057 (CN)
(72) Inventor: DAI, Bo, Shenzhen, Guangdong 518057 (CN); XIE, Feng, Shenzhen, Guangdong 518057 (CN); HU, Liujun, Shenzhen, Guangdong 518057 (CN); YU, Guanghui, Shenzhen, Guangdong 518057 (CN); SHA, Xiubin, Shenzhen, Guangdong 518057 (CN); XUE, Yan, Shenzhen, Guangdong 518057 (CN)
(74) Representative: Aipex B.V.
(86) International application number: PCT/CN2023/070679
(87) International publication number: WO 2023/173913

(57) **Abstract**

Provided are a network node, a communication method, and a storage medium. The network node includes a first preset function of a first network node and a second preset function of a second network node, where the first network node and the second network node are different network nodes, and the second network node includes an access network node.

## Description

### TECHNICAL FIELD

The present application relates to the field of communications and, for example, to a network node, a communication method, and a storage medium.

### BACKGROUND

To adapt to the development of the 5th generation mobile communication technology (5G) network, a base station with a distributed architecture based on a centralized unit (CU) and a distributed unit (DU) has been proposed for the radio access network (RAN).

The functions of a radio access network and the functions of a core network included in the existing wireless network are strictly split, which is not conducive to the deployment flexibility of the network.

### SUMMARY

The present application provides a network node, a communication method, and a storage medium.

An embodiment of the present application provides a network node.

The network node includes a first preset function of a first network node and a second preset function of a second network node. The first network node and the second network node are different network nodes. The second network node includes an access network node.

An embodiment of the present application further provides a communication method. The communication method includes: a third network node is communicated with through the network node provided by the embodiments of the present application.

An embodiment of the present application further provides a storage medium storing a computer program which, when executed by a processor, causes the processor to perform the aforementioned communication method.

The above embodiments and other aspects of the present application and implementations thereof are described in more detail in the description of drawings, detailed description, and claims.

### BRIEF DESCRIPTION OF DRAWINGS

FIG. 1 is a schematic diagram illustrating the implementation of protocol stacks included in a DU according to an embodiment;
FIG. 2 is a structure diagram of a network node according to an embodiment;
FIG. 3 is a schematic diagram illustrating the implementation of the function configuration of a network node according to an embodiment;
FIG. 4 is another schematic diagram illustrating the implementation of the function configuration of a network node according to an embodiment;
FIG. 5 is another schematic diagram illustrating the implementation of the function configuration of a network node according to an embodiment;
FIG. 6 is another schematic diagram illustrating the implementation of the function configuration of a network node according to an embodiment;
FIG. 7 is another schematic diagram illustrating the implementation of the function configuration of a network node according to an embodiment;
FIG. 8 is another schematic diagram illustrating the implementation of the function configuration of a network node according to an embodiment;
FIG. 9 is another schematic diagram illustrating the implementation of the function configuration of a network node according to an embodiment;
FIG. 10 is another schematic diagram illustrating the implementation of the function configuration of a network node according to an embodiment;
FIG. 11 is another schematic diagram illustrating the implementation of the function configuration of a network node according to an embodiment;
FIG. 12 is another schematic diagram illustrating the implementation of the function configuration of a network node according to an embodiment;
FIG. 13 is another schematic diagram illustrating the implementation of the function configuration of a network node according to an embodiment;
FIG. 14 is another schematic diagram illustrating the implementation of the function configuration of a network node according to an embodiment;
FIG. 15 is another schematic diagram illustrating the implementation of the function configuration of a network node according to an embodiment;
FIG. 16 is another schematic diagram illustrating the implementation of the function configuration of a network node according to an embodiment;
FIG. 17 is another schematic diagram illustrating the implementation of the function configuration of a network node according to an embodiment;
FIG. 18 is another schematic diagram illustrating the implementation of the function configuration of a network node according to an embodiment;
FIG. 19 is another schematic diagram illustrating the implementation of the function configuration of a network node according to an embodiment;
FIG. 20 is another schematic diagram illustrating the implementation of the function configuration of a network node according to an embodiment;
FIG. 21 is a schematic diagram illustrating the implementation of a control plane according to an embodiment;
FIG. 22 is another schematic diagram illustrating the implementation of the function configuration of a network node according to an embodiment;
FIG. 23 is another schematic diagram illustrating the implementation of the function configuration of a network node according to an embodiment;
FIG. 24 is another schematic diagram illustrating the implementation of the function configuration of a network node according to an embodiment;
FIG. 25 is a schematic diagram illustrating the implementation of function synchronization, mapping or twinning between a first network node and a second network node according to an embodiment;
FIG. 26 is a schematic diagram illustrating the implementation of function repetition between a first network node and a second network node according to an embodiment;
FIG. 27 is a flowchart of a communication method according to an embodiment; and
FIG. 28 is a structure diagram of a communication apparatus according to an embodiment.

### DETAILED DESCRIPTION

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described here.

The core network function nodes in the related art include preset Access and Mobility Management Function (AMF), Session Management Function (SMF), User Plane Function (UPF), Unified Data Management (UDM), Network Repository Function (NRF), Network Exposure Function (NEF), and the like. The AMF network element, SMA network element and UPF network element are related to the access network.

The AMF supports a user equipment (UE) having different mobility management requirements. The main functions of the AMF include: non-access stratum (NAS) signaling termination, NAS signaling security, access stratum (AS) security control, inter-core network node signaling for mobility between 3GPP access networks, idle mode UE reachability (including control and execution of paging retransmission), registration area management, support of intra-system and inter-system mobility, access authentication, access authorization (including check of roaming rights), mobility management control (subscription and policies), support of network slicing, and SMF selection.

The SMF, together with the AMF, can support customized mobility management schemes, for example, Mobile Initiated Connection Only (MICO) or RAN enhancements such as a radio resource control (RRC) Inactive state (that is, RRC_INACTIVE state). The main functions of the SMF include: session management, UE Internet Protocol (IP) address allocation and management, selection and control of the UPF, configuring traffic steering at the UPF to route traffic to a proper destination, a control part of policy enforcement and QoS, and downlink data notification.

The main functions of the UPF include: an anchor point for intra-/inter-system mobility, an external protocol data unit (PDU) session point of interconnect to a data network, packet routing & forwarding, packet inspection and a user plane part of policy rule enforcement, traffic usage reporting, an uplink classifier (to support routing traffic flows to a data network), a branching point to support a multi-homed PDU session, quality of service (QoS) handling for the user plane (including packet filtering, gating, and uplink/downlink rate enforcement), uplink traffic verification (SDF to QoS flow mapping), and downlink packet buffering and downlink data notification triggering, where SDF denotes the Standard Delay Format.

Other main network functions are as follows:

NRF: The NRF is responsible for providing support for network function (NF) service management, including registration, deregistration, authorization, and discovery.

NEF: The Network Exposure Function (NEF) is responsible for providing external exposure of the network capabilities of the network function. The external exposure can be divided into monitoring capabilities, supply capabilities, application impacts of traffic routing, and policy/charging capabilities.

UDM: The UDM in 5G core network (5GC) supports separated data storage and compute architecture for computing and storage. The Unified Data Repository (UDR) is the master database. The Unstructured Data Storage Function (UDSF) is introduced to store dynamic data.

The access network supports the separation between a CU and a DU. The CU mainly includes non-real-time radio higher-layer protocol stack functions and also supports the offload of partial core network functions (for example, UPF) and the deployment of mobile edge computing (MEC) traffic. The DU is mainly responsible for processing physical layer functions and air interface protocol layer functions having high real-time requirements.

The CU may be further separated into a CU-control plane (CU-CP) and a CU-user plane (CU-UP).

The interface between the AMF and the CU-CP is the N2 interface, the interface between the UPF and the CU-UP is the N3 interface, the interface between the CU-CP and the CU-UP is the E1 interface, the interface between the CU-CP and the user plane (UP) is the F1-CP interface, the interface between the CU-UP and the UP is the F1-UP interface, and the interface between the UPF and the SMF is the N4 interface.

The air interface higher-layer protocol is divided into two categories: the user plane protocol and the control plane protocol.

The user plane protocol is used for implementing functions related to resource allocation and data transmission. The control plane protocol is used for implementing control functions related to the communication with the UE, and various control commands generated by the control functions are transmitted through the user plane protocol. The aforementioned protocols mainly include Service Data Adaptation Protocol (SDAP), Packet Data Convergence Protocol (PDCP), Radio Link Control (RLC), Medium Access Control (MAC), and Physical layer (PHY) protocols.

The functions of the control plane (CP) include: RRC states and state machines, signaling radio bearers, connection control and management (for example, RRC setup, RRC reconfiguration, RRC release, RRC reestablishment, RRC resume, and the like), bearer management, inter-system mobility control (including the mobility management policy between a New Radio (NR) system and a Long Term Evolution (LTE) system and the main process thereof such as reselection, handover and redirection), and the like. The control plane protocol includes RRC, PDCP, RLC, MAC, and PHY protocols.

The NG interface, an interface between a Next Generation Radio Access Network (NG-RAN) and a core network, is responsible for conveying control signaling and user data between the NG-RAN and the core network. The NG interface is divided into an NG user plane interface (NG-U) and an NG control plane interface (NG-C). The NG interface is located between the NG-RAN and the 5GC. The NG-U interface is responsible for transmitting the user PDUs between the CU-UP and the UPF, and the PDU session user plane protocol data is conveyed based on the General Packet Radio System (GPRS) Tunneling Protocol User Plane (GTPU) transport protocol.

The SDAP is one of the CU user plane modules in the 5G protocol stack and is located in the CU-UP. The one kind of data that the SDAP transmits is the user data of the user plane. The SDAP maps a data flow containing QoS from the core network onto a specific radio bearer (RB) at a lower layer.

The PDCP receives control plane signaling, the Simple DFS Access Protocol (SDAP), the F1 interface or GTPU data and sends it to different radio bearers. The main functions of the PDCP include transfer of data, ciphering and deciphering, integrity protection and integrity verification, and header compression. The PDCP-control plane (PDCP-C) is located in the CU-CP and is responsible for transmitting signaling data of the control plane, and the PDCP-user plane (PDCP-U) is located in the CU-UP and is responsible for transmitting user data of the data plane.

RRC involves parameter generation and distribution of related procedures, configuration and message processing for modules, and maintenance of control block information of cells and UEs.

The RLC is located between the PDCP layer and the MAC layer and communicates with the PDCP layer through an RLC channel and with the MAC layer through a logical channel.

The functions of the MAC layer include uplink message reception, parsing and processing, downlink message construction and transmission, user optimization level processing, logical channel optimization and processing, hybrid automatic repeat request (HARQ) functions, control of the PHY, physical downlink control channel (PDCCH) management, and uplink/downlink resource scheduling.

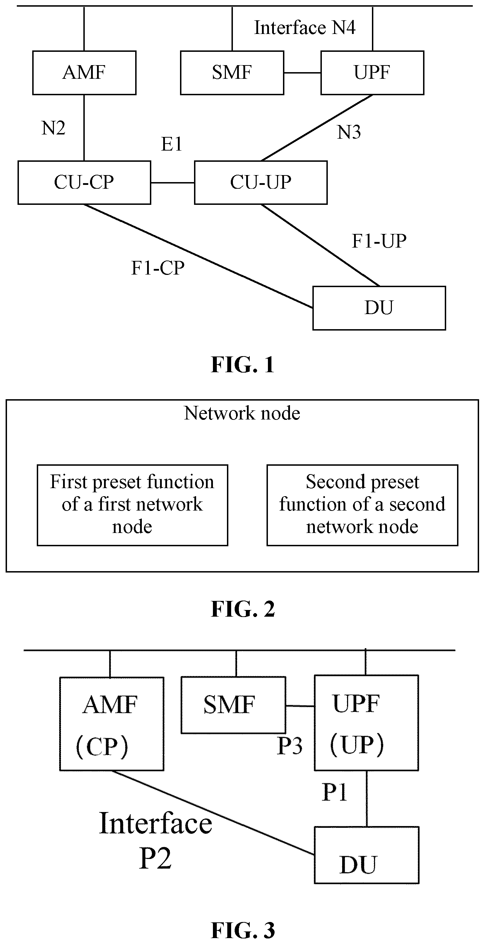

FIG. 1 is a schematic diagram illustrating the implementation of protocol stacks included in a DU according to an embodiment. As shown in FIG. 1, the protocol stacks included in the DU are RLC, MAC and PHY, and the CU-UP includes SDAP and PDCP.

The Service-based Architecture (SBA) is an important feature of the 5G, and in conjunction with the features of the mobile core network and the technology development trend, the network functions are divided into several reusable "services". The "services" communicate with each other through lightweight interfaces. The object of the SBA is to achieve the high efficiency, softwarization and openness of the 5G system. The deployment flexibility of the service-based architecture of wireless networks in the related art is poor.

To solve the aforementioned problems, FIG. 2 is a structure diagram of a network node according to an embodiment. As shown in FIG. 2, the network node provided in the embodiment includes a first preset function of a first network node and a second preset function of a second network node. The first network node and the second network node are different network nodes. The second network node includes an access network node.

The first preset function may be understood as a partial network function contained in the first network node. The second preset function may be understood as a partial network function contained in the second network node.

The type of the first network node is not limited here, as long as the first network node and the second network node are different network nodes. For example, the first network node may be a core network node or may be an access network node different from the second network node.

The network node may refer to a new network node including the first preset function of the first network node and the second preset function of the second network node, and the network node may also be called a function node. For example, if the UPF of the core network node includes a partial UP function of the access network node, which may be denoted as UPF(UP), then UPF(UP) may be understood as a new network node.

There are various ways of how to make the network node include the first preset function of the first network node and the second preset function of the second network node, which are not limited here. For example, when the first network node is a core network node, the first network node may be made to have the second preset function of the second network node, or the second network node may be made to have a second preset function of the first network node, or the first network node and the second network node may be made to have a same function. When the first network node is an access network node different from the second network node, the first network node and the second network node may be made to have a same function.

In the above embodiment, by setting a new network node including both the first preset function of the first network node and the second preset function of the second network node, where the second network node includes an access network node and the first network node and the second network node belong to different network nodes, the new network node is enabled to have the functions of multiple network nodes, thereby improving the deployment flexibility of the wireless network.

In an embodiment, the first network node includes a core network node.

In the above embodiment, the first network node may include a core network node, the second network node may include an access network node, and the first network node and the second network node are different network nodes.

In the related art, the CU communicates with the core network in a point-to-point manner. The CU has a certain dependence on the core network, and thus, any change in the network elements of the core network leads to the reconfiguration of an access network, thereby resulting in poor flexibility of the wireless network.

In the above embodiment, the new network node is made to have a partial function of the core network and a partial function of the access network, thereby reducing the dependence of the access network on the core network and improving the flexibility of the wireless network.

In an embodiment, the first preset function includes a preset AMF.

In the above embodiment, when the first network node includes a core network node and the second network node includes an access network node, the first preset function of the first network node may include a preset AMF.

The preset AMF may be a preset partial function in the functions of the AMF, and the content included in the preset AMF is not limited here and may be defined based on the actual situation.

In an embodiment, the preset AMF includes: at least one of NAS signaling termination, NAS signaling security, access stratum security control, access authentication, access authorization, mobility management control, or network slicing.

In an embodiment, the first preset function includes a preset UPF.

In the above embodiment, when the first network node includes a core network node and the second network node includes an access network node, the first preset function of the first network node may include a preset UPF. The preset UPF may be a preset partial function in the functions of the UPF, and the content included in the preset UPF is not limited here and may be defined based on the actual situation.

In an embodiment, the preset UPF includes: one or more of packet routing & forwarding, packet inspection and a user plane part of policy rule enforcement, traffic usage reporting, an uplink classifier, QoS handling for the user plane, uplink traffic verification, or downlink packet buffering and downlink data notification triggering.

In an embodiment, the second preset function includes one or more of a preset CP function or a preset UP function.

In the above embodiment, when the first network node includes a core network node and the second network node includes an access network node, the second preset function of the second network node may include a preset CP function and a preset UP function.

The preset CP function may be a preset partial function in the functions of the CP, and the content included in the preset CP function is not limited here and may be defined based on the actual situation.

The preset UP function may be a preset partial function in functions of the UP, and the content included in the preset UP function is not limited here and may be defined based on the actual situation.

In an embodiment, the preset CP includes radio resource control (RRC).

In an embodiment, the preset UP function includes one or more of Service Data Adaptation Protocol (SDAP) or Packet Data Convergence Protocol (PDCP).

In an embodiment, the core network node has the second present function.

In the above embodiment, when the first network node includes a core network node and the second network node includes an access network node, the core network node may have the second preset function of the second network node, thereby making the network node have both the first preset function of the first network node and the second preset function of the second network node.

There are various ways of how to make the core network node have the second preset function, which are not limited here.

In an embodiment, the AMF of the core network node or the UPF of the core network node has the second preset function.

In an embodiment, the AMF of the core network node and the UPF of the core network node have different second preset functions.

In the above embodiment, the second preset function that the AMF of the core network node has may be different from the second preset function that the UPF of the core network node has. The second preset function is not limited here.

In an embodiment, the AMF includes multiple function sub-nodes, and a certain function sub-node has the second preset function.

In an embodiment, the UPF has multiple function sub-nodes, and a certain function sub-node has the second preset function.

The AMF can be enabled to have the second preset function by setting multiple function sub-nodes and making a certain function sub-node have the second preset function. The remaining function sub-nodes other than the function sub-node having the second preset function may have the original functions of the AMF. The same is true for the UPF, and the details are not repeated here.

In an embodiment, the second network node has the first preset function.

In the above embodiment, when the first network node includes a core network node and the second network node includes an access network node, the second network node may have the first preset function, thereby making the network node have both the first preset function of the first network node and the second preset function of the second network node.

There are various ways of how to make the first network node have the first preset function, which are not limited here. For example, the first network node may have the first preset function by making the control plane have the first preset function or making the user plane have the first preset function.

In an embodiment, the control plane of the second network node includes a first function layer. The first function layer includes one of a NAS management layer, a management layer, an access management layer, or a mobility management layer.

When the control plane includes a first function layer, the first function layer included may be an independent layer, or the first function layer included may be combined with a first set function layer in the original function layer of the control plane. The first set function layer is not limited here and may be determined based on the actual situation. For example, the first set function layer may be an RRC layer.

In an embodiment, the user plane of the second network node includes a second function layer. The second function layer includes one of a QoS management layer, a user management layer, an uplink management layer, or a routing management layer.

When the user plane includes a second function layer, the second function layer included may be an independent layer, or the second function layer included may be combined with a second set function layer in the original function layer of the user plane. The second set function layer is not limited here and may be determined based on the actual situation. For example, the second set function layer may be an SDAP layer or a PDCP layer.

In an embodiment, the first network node and the second network node have the same function.

In the above embodiment, the network node is made to have both the function of the first network node and the function of the second network node by making the first network node and the second network node have the same function.

The first network node may be a core network node or may be an access network node different from the second network node.

The same function that the first network node and the second network node have may be defined based on the actual situation, which is not limited here.

How the first network node and the second network node have the same function is not limited here. For example, the first network node and the second network node may have the same function by one or more manners such as synchronization, mapping, repetition, and twinning.

In an embodiment, the first network node is an access network node different from the second network node, and the first network node and the second network node have the same function.

In an embodiment, the same function includes one or more of a PDCP function or a MAC function.

In an embodiment, the same function is synchronized, mapped, repeated or twinned between the first network node and the second network node.

In an embodiment, the UPF of the network node includes a preset SMF.

In the above embodiment, on the basis of the embodiments described above, the UPF of the network node is made to include the preset SMF. The preset SMF may be a preset partial function in functions of the SMF, and the content included in the preset SMF is not limited here.

In an embodiment, the preset SMF includes at least one of selection and control of the UPF, traffic steering at the UPF to route traffic to a proper destination, a control part of policy enforcement and QoS, or downlink data notification.

The network node is illustrative below through different embodiments.

To adapt to the development of the 5G network, a base station with a distributed architecture based on a central unit (CU) and distributed unit (DU) has been proposed for the RAN. The NG interface is the interface between an NG-RAN and a core network and is responsible for conveying control signaling and user data between the NG-RAN and the core network. The NG interface is divided into an NG-U and an NG-C.

Currently, the CU communicates with the core network in a point-to-point manner. The CU has a certain dependence on the core network, and thus, any change in the network elements of the core network leads to the reconfiguration of an access network, thereby resulting in poor flexibility and extensibility of the whole network.

The main problem of the 5G network in the related art is that the core network function and the access network function are strictly split, which results in a large number of interfaces, a long data transmission path, complex control, and a large transmission delay, thereby increasing transmission uncertainty and hampering the flexible deployment of the network. Besides, the access network is complex, thereby increasing the deployment cost. Therefore, the present application designs a new communication device (network node) to make the network node have both a core network function and an access network function, thereby simplifying the network structure, shortening the data transmission path, reducing the transmission delay, reducing the number of interfaces, decreasing the transmission uncertainty, improving the flexible deployment, and lowering the deployment cost.

The communication device (network node) has a partial core network function and a partial access network function. The partial core network function includes a partial AMF (that is, a preset AMF) and a partial UPF (that is, a preset UPF). The partial access network function includes a partial CP function (that is, a preset CP function) and a partial UP function (that is, a preset UP function).

The partial CP function at least includes an RRC function. The partial UP function includes at least one of SDAP or PDCP.

In addition, to shorten the data transmission path and reduce the control complexity, the UPF-related functions in the SMF may be merged into the UPF so that no interface is required to connect the SMF and the UPF.

To improve the control flexibility and the data transmission efficiency, the core network node and the access network node may include the same protocol function, or different access network nodes may include the same protocol stack. That is, for a certain terminal, the whole network has a dual protocol stack or a multi-protocol stack.

For example, the PDCP function or the PDCP protocol may exist in both the core network node and the access network node. The MAC function or the MAC protocol may exist in multiple access network nodes and is responsible for the joint scheduling of multiple nodes, that is, the MAC information or the PDCP information of a user is synchronized (or repeated, mapped or twinned) in multiple nodes (a core network node and/or an access network node).

The above example is specifically described below in the form of embodiments.

### Embodiment one

FIG. 3 is a schematic diagram illustrating the implementation of the function configuration of a network node according to an embodiment. As shown in FIG. 3, the AMF (that is, the AMF of the core network node) includes a partial access network function, and the UPF (that is, the UPF of the core network node) includes a partial access network function. The partial access network function may refer to a second preset function. The AMF of the core network node and the UPF of the core network node have different second preset functions, which specifically includes the following cases.

AMF(CP), that is, the AMF includes a partial CP function (that is, a preset CP function), for example, RRC, or, RRC and PDCP.

UPF(UP), that is, the UPF includes a partial UP function (that is, a preset UP function), for example, SDAP and PDCP, or, one of SDAP or PDCP.

The DU includes RLC, MAC, and PHY functions, or, the DU includes PDCP, RLC, MAC, and PHY functions. In this case, the DU, UPF and AMF may all include a PDCP function (or both the DU and UPF include a PDCP function, or both the DU and AMF include a PDCP function). The PDCP function of the core network node (for example, UPF) or the PDCP function of the access network node (for example, DU) may be adopted for data transmission, and the PDCP function of the core network node (for example, AMF) or the PDCP function of the access network node (for example, DU) may be adopted for control signaling.

The UPF is connected to the DU, and the interface between the UPF and the DU is the first interface (P1). The AMF is connected to the DU, and the interface between the AMF and the DU is the second interface (P2). The SMF is connected to the UPF, and the interface between the SMF and the UPF may be the newly defined third interface (P3) or the existing interface N4.

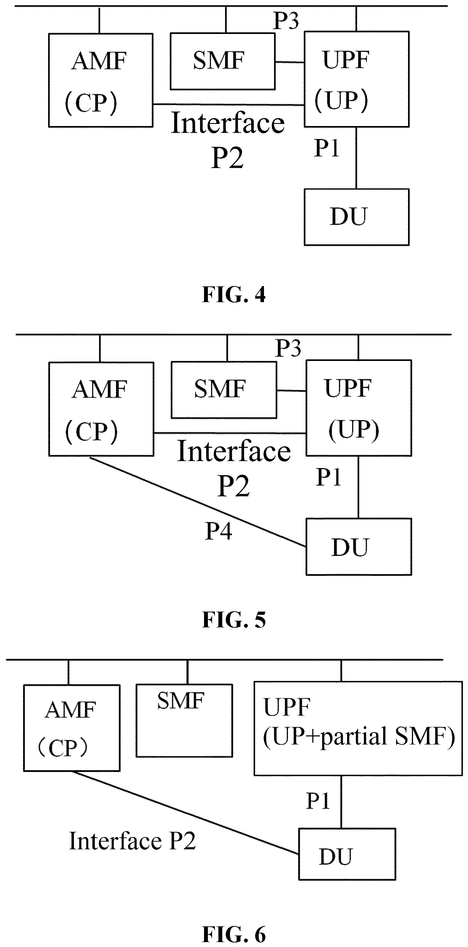

It is to be noted that, with the AMF(CP) and the UPF(UP) in FIG. 3 as an example, the AMF(CP) and the UPF(UP) indicate that the core network node accesses partial functions of the access network node, and thus, the AMF(CP) and the UPF(UP) may be considered as new network nodes. The same is true for FIGS. 4, 5, 6, 7, 8, 9, 10 and 17, and the details are not repeated here.

FIG. 4 is another schematic diagram illustrating the implementation of the function configuration of a network node according to an embodiment. As shown in FIG. 4, the AMF may also be directly connected to the UPF, and the interface between the AMF and the UPF is the interface P2. In this case, the AMF at least includes RRC and may not include PDCP, and the RRC signaling may be transmitted to the DU through the UPF, either via a signaling interface or via a NAS message. The SMF is connected to the UPF, and the interface between the SMF and the UPF is the interface P3. The UPF is connected to the DU, and the interface between the UPF and the DU is the interface P1.

FIG. 5 is another schematic diagram illustrating the implementation of the function configuration of a network node according to an embodiment. As shown in FIG. 5, the AMF is connected to the UPF with a connection interface of P2. The AMF is also connected to the DU with a connection interface of P4. The SMF is connected to the UPF with a connection interface of P3. The UPF is connected to the DU with a connection interface of P1.

The interfaces of the DU can be serviceably defined and unified as a single interface. In this manner, the AMF and the UPF can directly call the single interface, and no more multiple interfaces need to be defined.

In addition, on the basis of the embodiments described above, the UPF may also include a partial SMF (that is, a preset SMF) in addition to a partial UP function, which may be denoted as UPF(UP+partial SMF). The remaining SMF after the partial SMF is removed may be denoted as SMF. The partial SMF includes at least one of selection and control of the UPF, traffic steering at the UPF to route traffic to a proper destination, a control part of policy enforcement and QoS, or downlink data notification.

FIG. 6 is another schematic diagram illustrating the implementation of the function configuration of a network node according to an embodiment. As shown in FIG. 6, the AMF is connected to the DU with a connection interface of P2. The UPF(UP+partial SMF) is connected to the DU with a connection interface of P 1.

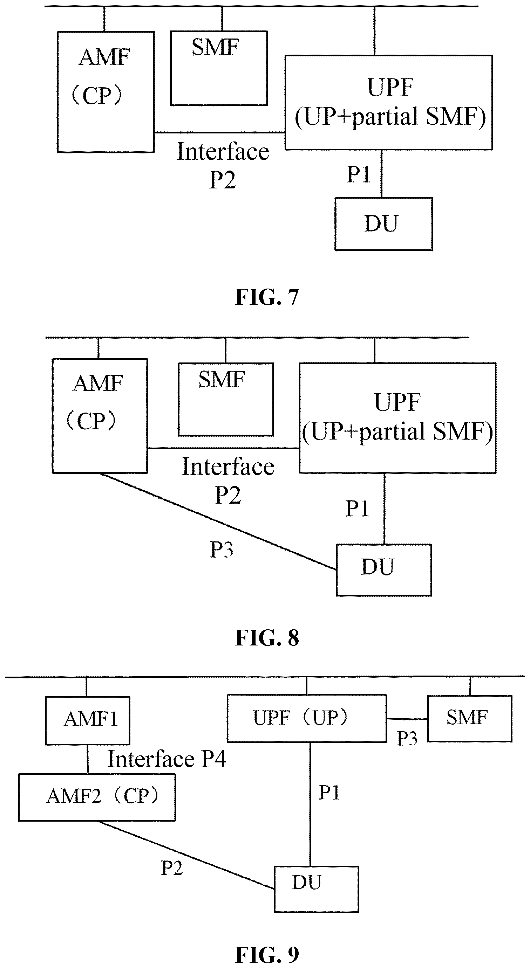

FIG. 7 is another schematic diagram illustrating the implementation of the function configuration of a network node according to an embodiment. As shown in FIG. 7, the AMF is connected to the UPF(UP+partial SMF) with a connection interface of P2. The UPF(UP+partial SMF) is connected to the DU with a connection interface of P1.

FIG. 8 is another schematic diagram illustrating the implementation of the function configuration of a network node according to an embodiment. As shown in FIG. 8, the AMF is connected to the UPF(UP+partial SMF) with a connection interface of P2. The AMF is also connected to the DU with a connection interface of P3. The UPF(UP+partial SMF) is connected to the DU with a connection interface of P 1.

It is to be noted that, in FIGS. 6, 7 and 8, no interface connection is required between the SMF and the UPF(UP+partial SMF).

Through the above function fusion, the network structure is simplified, the data transmission path is shortened, the transmission delay is reduced, the number of interfaces is reduced, the transmission uncertainty is decreased, the flexible deployment is improved, and the deployment cost is lowered.

### Embodiment two

The AMF includes a partial access network function, and the UPF includes a partial access network function. The AMF of the core network node and the UPF of the core network node may have different second preset functions or may have the same second preset function, which specifically includes the following cases.

The AMF includes a partial CP function (that is, AMF(CP)), for example, RRC, or, RRC and PDCP.

The UPF includes a partial UP function (that is, UPF(UP)), for example, SDAP and PDCP, or, one of SDAP or PDCP.

The DU includes RLC, MAC, and PHY functions, or, the DU includes PDCP, RLC, MAC, and PHY functions. In this case, the DU, UPF and AMF may all include a PDCP function (or both the DU and UPF include a PDCP function, or both the DU and AMF include a PDCP function). The PDCP function of the core network node (for example, UPF) or the PDCP function of the access network node (for example, DU) may be adopted for data transmission, and the PDCP function of the core network node (for example, AMF) or the PDCP function of the access network node (for example, DU) may be adopted for control signaling.

The UPF is connected to the DU, and the interface between the UPF and the DU is the first interface (P1). The AMF is connected to the DU, and the interface between the AMF and the DU is the second interface (P2). The SMF is connected to the UPF, and the interface between the SMF and the UPF may be the newly defined third interface (P3) or the existing interface N4.

The AMF may include multiple function sub-nodes such as AMF1 and AMF2, and/or, the UPF may include multiple function sub-nodes such as UPF1 and UPF2.

FIG. 9 is another schematic diagram illustrating the implementation of the function configuration of a network node according to an embodiment. As shown in FIG. 9, the AMF1 is connected to the AMF2 with a connection interface of P4. The AMF2 is connected to the DU with a connection interface of P2. The UPF is connected to the DU with a connection interface of P1. The UPF is connected to the SMF with a connection interface of P3. The AMF2 may also be connected to the UPF with a connection interface of P4, or the AMF2 is not connected to the DU but connected to the UPF with a connection interface of P2.

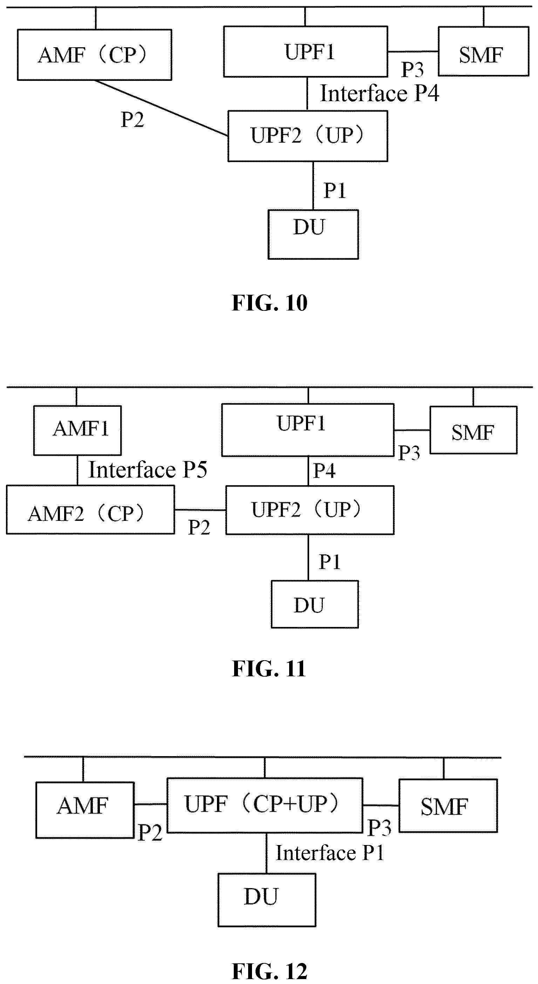

FIG. 10 is another schematic diagram illustrating the implementation of the function configuration of a network node according to an embodiment. As shown in FIG. 10, the AMF is connected to the UPF2 with a connection interface of P2. The UPF1 is connected to the UPF2 with a connection interface of P4. The UPF2 is connected to the DU with a connection interface of P1. The UPF1 is connected to the SMF with a connection interface of P3. The AMF may also be connected to the DU with a connection interface of P5, or the AMF is not connected to the UPF2 but connected to the DU with a connection interface of P2.

FIG. 11 is another schematic diagram illustrating the implementation of the function configuration of a network node according to an embodiment. As shown in FIG. 11, the AMF1 is connected to the AMF2 with a connection interface of P5. The AMF2 is connected to the UPF2 with a connection interface of P2. The UPF1 is connected to the UPF2 with a connection interface of P4. The UPF1 is connected to the SMF with a connection interface of P3. The UPF2 is connected to the DU with a connection interface of P1. The AMF2 may also be connected to the DU with a connection interface of P6, or the AMF2 is not connected to the UPF2 but connected to the DU with a connection interface of P2.

The interfaces of the DU can be serviceably defined and unified as a single interface. In this manner, the AMF and the UPF can directly call the single interface, and no more multiple interfaces need to be defined.

In addition, on the basis of the embodiments described above, the UPF may also include a partial SMF in addition to a partial UP function, which may be denoted as UPF(UP+SMF). The remaining SMF after the partial SMF is removed may be denoted as SMF. In this manner, no interface connection is required between the SMF and the UPF1, for example, in FIGS. 9, 10 and 11, the interface P3 may be removed, the SMF does not need to be connected to the UPF1, and other connections remain unchanged.

Through the above function fusion, the network structure is simplified, the number of interfaces of the access node is reduced, the flexible deployment is improved, and the deployment cost of the access node is lowered.

### Embodiment three

FIG. 12 is another schematic diagram illustrating the implementation of the function configuration of a network node according to an embodiment. As shown in FIG. 12, the UPF includes a partial access network function (that is, the UPF has a second preset function), which specifically includes the following case.

The UPF includes a partial UP function and a partial CP function (that is, the UPF includes a preset UP function and a preset CP function), which may be denoted as UPF(CP+UP), for example, the UPF includes RRC, SDAP and PDCP; or, the UPF includes RRC and one of SDAP or PDCP.

The DU includes RLC, MAC, and PHY functions, or, the DU includes PDCP, RLC, MAC, and PHY functions. In this case, the DU and UPF may both include a PDCP function. The PDCP function of the core network node (for example, UPF) or the PDCP function of the access network node (for example, DU) may be adopted for data transmission, and the PDCP function of the core network node (for example, UMF) or the PDCP function of the access network node (for example, DU) may be adopted for control signaling.

The UPF is connected to the DU, and the interface between the UPF and the DU is the first interface (P1). The AMF is connected to the UPF, and the interface between the AMF and the UPF is the second interface (P2). The SMF is connected to the UPF, and the interface between the SMF and the UPF may be the newly defined third interface (P3) or the existing interface N4.

In addition, on the basis of the embodiments described above, the UPF may be divided into multiple function sub-nodes such as UPF1 and UPF2, or, UPF1, UPF2 and UPF3.

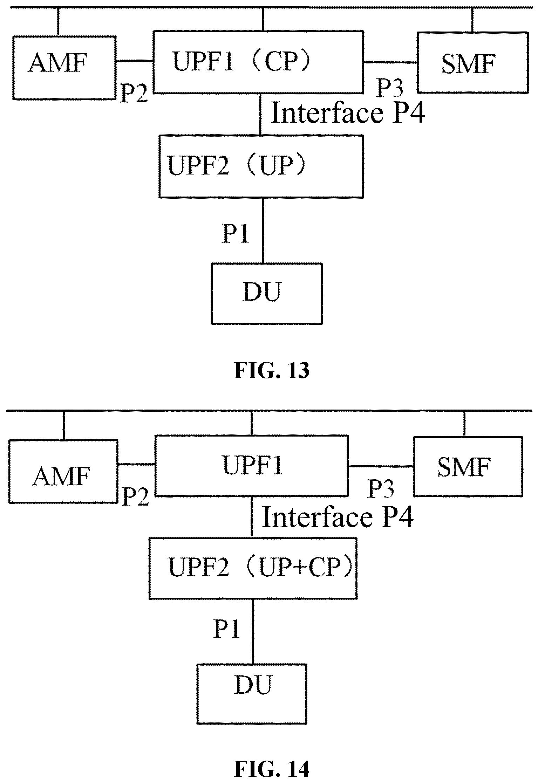

FIG. 13 is another schematic diagram illustrating the implementation of the function configuration of a network node according to an embodiment. As shown in FIG. 13, the UPF may be divided into UPF1 and UPF2. The UPF1 may include a partial CP function, and the UPF2 may include a partial UP function. The AMF is connected to the UPF1 with a connection interface of P2. The UPF1 is connected to the UPF2 with a connection interface of P4. The UPF2 is connected to the DU with a connection interface of P1. The SMF is connected to the UPF1 with a connection interface of P3. The UPF1 may also be connected to the DU with a corresponding interface of P5.

FIG. 14 is another schematic diagram illustrating the implementation of the function configuration of a network node according to an embodiment. As shown in FIG. 14, the UPF2 may include a partial CP function and a partial UP function (that is, UPF2(CP+UP)). The AMF is connected to the UPF1 with a connection interface of P2. The UPF1 is connected to the UPF2 with a connection interface of P4. The UPF2 is connected to the DU with a connection interface of P1. The SMF is connected to the UPF1 with a connection interface of P3.

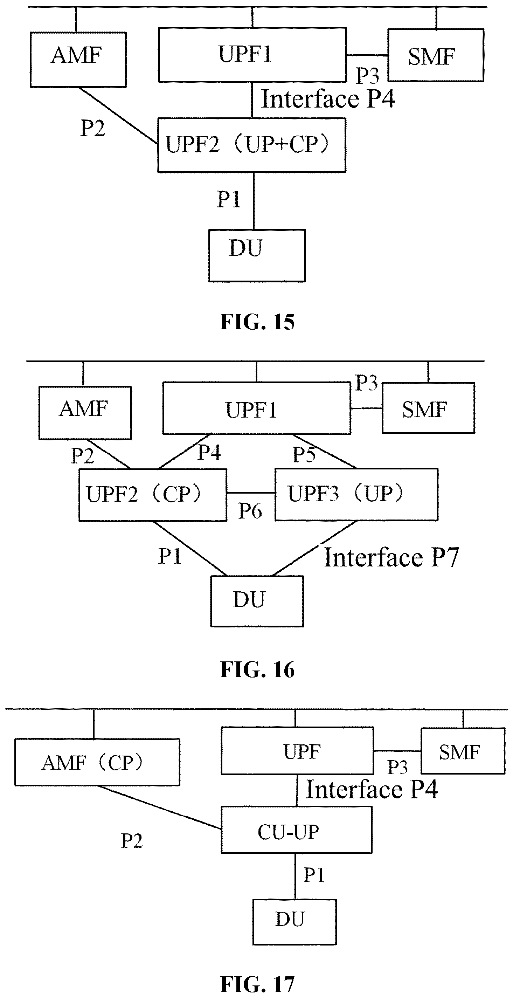

FIG. 15 is another schematic diagram illustrating the implementation of the function configuration of a network node according to an embodiment. As shown in FIG. 15, the AMF is connected to the UPF2 with a corresponding interface of P2. The UPF1 is connected to the UPF2 with a connection interface of P4. The UPF2 is connected to the DU with a connection interface of P1. The SMF is connected to the UPF1 with a connection interface of P3.

FIG. 16 is another schematic diagram illustrating the implementation of the function configuration of a network node according to an embodiment. As shown in FIG. 16, the UPF may be divided into UPF1, UPF2 and UPF3. The UPF2 may include a partial CP function, and the UPF3 may include a partial UP function. In this case, the AMF may be connected to the UPF2 with a connection interface of P2. The UPF1 is connected to the UPF2 with a connection interface of P4. The UPF1 is connected to the UPF3 with a connection interface of P5. The UPF2 is connected to the UPF3 with a connection interface of P6. The UPF2 is connected to the DU with a connection interface of P1. The UPF3 is connected to the DU with a connection interface of P7. The SMF is connected to the UPF1 with a connection interface of P3. In addition, the AMF may be connected to the UPF1 (with a corresponding interface of P2) instead of the UPF2.

The interfaces of the DU can be serviceably defined and unified as a single interface. In this manner, the AMF and the UPF can directly call the single interface, and no more multiple interfaces need to be defined.

In addition, on the basis of the embodiments described above, the UPF may also include a partial SMF in addition to a partial UP function and a partial CP function, which may be denoted as UPF(CP+UP+SMF). The remaining SMF after the partial SMF is removed may be denoted as SMF. In this manner, no interface connection is required between the SMF and the UPF1, for example, in FIGS. 12 to 16, the interface P3 may be removed, the SMF does not need to be connected to the UPF1, and other connections remain unchanged.

Through the above function fusion, the network structure is simplified, the number of interfaces of the access node is reduced, the flexible deployment is improved, and the deployment cost of the access node is lowered.

### Embodiment four

The AMF includes a partial access network function (that is, the AMF has a second preset function) which specifically includes RRC, or, RRC and PDCP.

### CU-UP includes SDAP and PDCP.

The DU includes RLC, MAC, and PHY functions, or, the DU includes PDCP, RLC, MAC, and PHY functions.

FIG. 17 is another schematic diagram illustrating the implementation of the function configuration of a network node according to an embodiment. As shown in FIG. 17, the CU-UP is not combined with the DU. The AMF is connected to the CU-UP with a connection interface of P2. The UPF is connected to the CU-UP with a connection interface of P4. The CU-UP is connected to the DU with a connection interface of P1. The SMF is connected to the UPF with a connection interface of P3. In addition, the AMF may also be directly connected to the DU through the interface P5.

It is to be understood that, on the basis of FIG. 17, the CU-UP and the DU may also be combined into CU-UP-DU, and the CU-UP-DU includes SDAP, PDCP, RLC, MAC, and PHY functions (which is equivalent to the case where no interface P1 exists in FIG. 17).

The DU and the CU-UP may both include a PDCP function. The PDCP function of the access network node (for example, CU-UP) or the PDCP function of the access network node (for example, DU) may be adopted for data transmission, and the PDCP function of the core network node (for example, AMF) or the PDCP function of the access network node (for example, DU) may be adopted for control signaling.

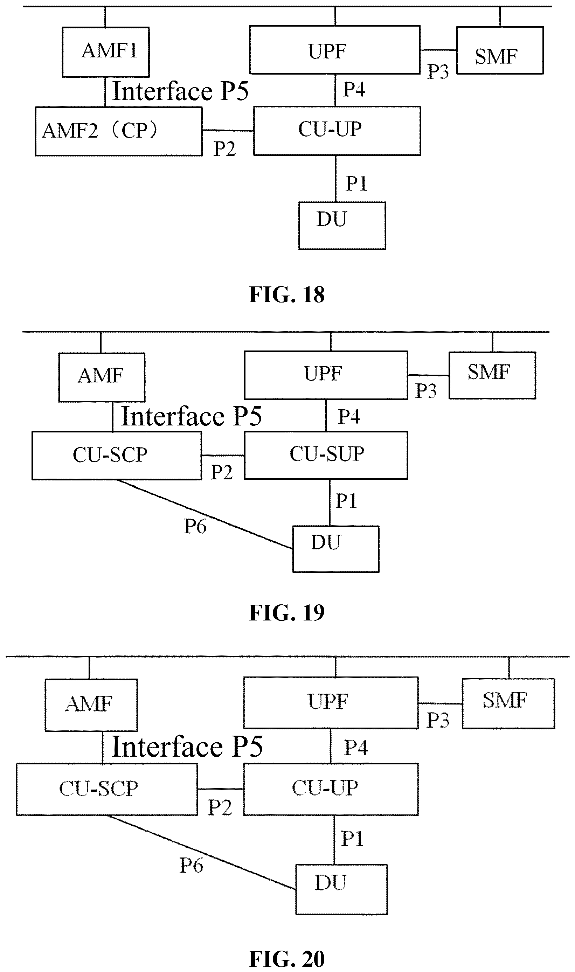

FIG. 18 is another schematic diagram illustrating the implementation of the function configuration of a network node according to an embodiment. As shown in FIG. 18, the AMF may be divided into multiple function sub-nodes such as AMF 1 and AMF2. The AMF2 includes a partial CP function. The AMF1 is connected to the AMF2 with a connection interface of P5. The AMF2 is connected to the CU-UP with a connection interface of P2. The UPF is connected to the CU-UP with a connection interface of P4. The CU-UP is connected to the DU with a connection interface of P1. The SMF is connected to the UPF with a connection interface of P3.

It is to be noted that, on the basis of FIG. 18, if the CU-UP is combined with the DU, the case is equivalent to that no interface P1 exists in FIG. 18. In addition, if the CU-UP is not combined with the DU, the AMF2 may also be connected to the DU through the interface P6.

The interfaces of the DU and the CU-CP can be serviceably defined and unified as a single interface. In this manner, the AMF and the UPF can directly call the single interface, and no more multiple interfaces need to be defined.

In addition, on the basis of the embodiments described above, the UPF may also include a partial SMF, which may be denoted as UPF(SMF). The remaining SMF after the partial SMF is removed may be denoted as SMF. In this manner, no interface connection is required between the SMF and the UPF, for example, in FIGS. 17 to 18, the interface P3 may be removed, the SMF does not need to be connected to the UPF, and other connections remain unchanged.

Through the above function fusion, the network structure is simplified, the number of interfaces of the access node is reduced, the flexible deployment is improved, and the deployment cost of the access node is lowered.

### Embodiment five

FIG. 19 is another schematic diagram illustrating the implementation of the function configuration of a network node according to an embodiment. As shown in FIG. 19, the CU-CP includes a partial AMF (that is, a preset AMF) and/or the CU-UP includes a partial UPF (that is, a preset UPF), that is, the access network node has a first preset function, and the first preset function includes the preset AMF and/or the preset UPF. The CU-CP includes a partial AMF, which may be denoted as CU-SCP. The CU-UP includes a partial UPF, which may be denoted as CU-SUP. Specifically, the AMF is connected to the CU-SCP with a connection interface of P5. The CU-SCP is connected to the CU-SUP with a connection interface of P2. The CU-SCP is connected to the DU with a connection interface of P6. The CU-SUP is connected to the DU with a connection interface of P1. The CU-SUP is connected to the UPF with a connection interface of P4. The UPF is connected to the SMF with a connection interface of P3.

In addition, FIG. 20 is another schematic diagram illustrating the implementation of the function configuration of a network node according to an embodiment. As shown in FIG. 20, the CU-CP includes a partial AMF, which may be denoted as CU-SCP.

It is to be understood that, the CU-UP and the DU may be combined into one node, that is, CU-UP-DU, which is equivalent to the case where no interfaces P6 and P1 exist.

The partial AMF at least includes at least one of NAS signaling termination, NAS signaling security, AS security control, access authentication, access authorization, mobility management control, or network slicing. The partial AMF may be considered as the case where a new function layer (that is, a first function layer, for example, a NAS management layer, a management layer, an access management layer, or a mobility management layer) is introduced to the control panel.

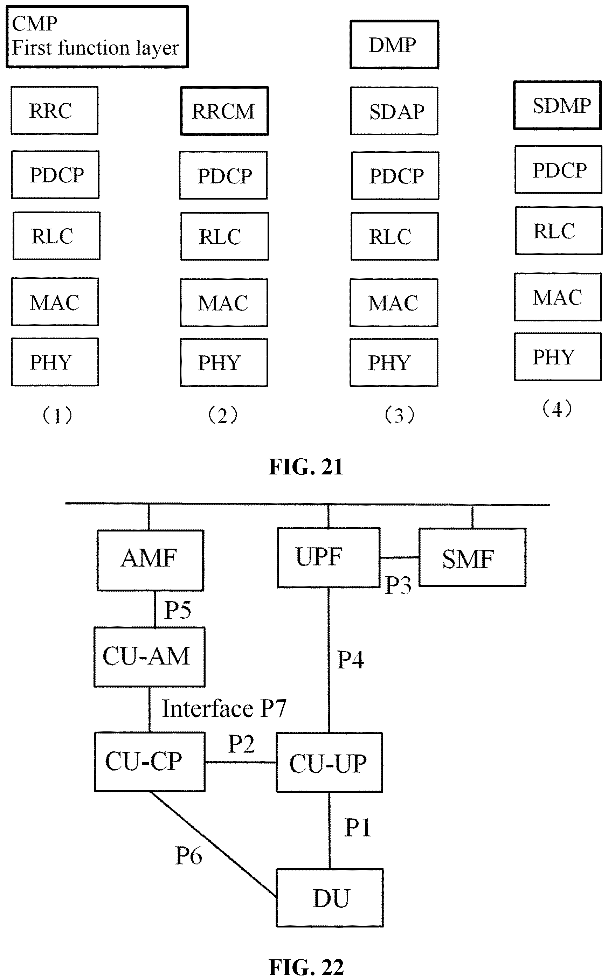

FIG. 21 is a schematic diagram illustrating the implementation of a control plane according to an embodiment. The control plane includes a first function layer. The first function layer specifically includes a NAS management layer, a management layer, a control management protocol (CMP) layer, an access management layer, or a mobility management layer. As shown in (1) in FIG. 21, the control plane signaling flow includes a first function layer (that is, CMP), RRC, PDCP, RLC, MAC, and PHY On the basis of the above, as shown in (2) in FIG. 21, the RRC and the first function layer may be combined into a new layer, that is, a radio resource control management (RRCM) layer. The partial UPF at least includes packet routing & forwarding, packet inspection and a user plane part of policy rule enforcement, traffic usage reporting, an uplink classifier, QoS handling for the user plane, uplink traffic verification (SDF to QoS flow mapping), and downlink packet buffering and downlink data notification triggering. The partial UPF may also be considered as the case where a new function layer is introduced to the user panel. The user plane includes a second function layer. The second function layer includes one of a QoS management layer, a service management layer, a data management protocol (DMP) layer, a user management layer, an uplink management layer, or a routing management layer (including at least one of routing, forwarding or flow control). As shown in (3) in FIG. 21, the user plane protocol stack includes a second function layer (that is, DMP), SDAP, PDCP, RLC, MAC, and PHY. In addition, on the basis of the above, as shown in (4) in FIG. 21, the SDAP and the second function layer may be combined into a new layer, that is, a service data management protocol (SDMP) layer.

The interfaces of the DU, the CU-CP and the CU-UP can be serviceably defined and unified as a single interface. In this manner, the AMF and the UPF can directly call the single interface, and no more multiple interfaces need to be defined. In addition, the servitization of the interfaces of the DU, the CU-CP and the CU-UP is performed under the precondition that the DU, the CU-CP and the CU-UP include a partial core network function.

On the basis of the embodiments described above, the UPF may also include a partial SMF. In this manner, no interface connection is required between the SMF and the UPF, for example, in FIG. 20, the interface P3 may be removed, the SMF does not need to be connected to the UPF, and other connections remain unchanged.

In above Embodiments one to four, if a core network node (AMF, AMF1, AMF2, UPF, UPF1, UPF2, or UPF3) includes a partial access network function (for example, RRC, SDAP, or PDCP), the core network node may be considered as an access network node and thus is no longer called AMF, AMF1, AMF2, UPF, UPF1, UPF2, or UPF3. Such a core network node is called a new access network node, for example, CU-SCP(SCP), CU-SUP(SUP) or enhanced RRC (eRRC), or is called an access network node including a new function layer (for example, one of a QoS management layer, a service management layer, a DMP layer, a user management layer, an uplink management layer or a routing management layer, or, one of a NAS management layer, a management layer, a CMP layer, an access management layer or a mobility management layer). The new access network node may replace the original core network node (AMF, AMF1, AMF2, UPF, UPF1, UPF2, or UPF3) in the figures of Embodiments one to four, and the corresponding interfaces and connections in the original figures may remain unchanged. For example, FIG. 11 may be mapped to FIG. 20.

For example, the AMF, the AMF1 or the AMF2 is located in the CU and is considered as a new node after CU-CP expansion, or the UPF, the UPF1, the UPF2 or the UPF3 is located in the CU and is considered as a new node after CU-DP expansion, as shown in FIG. 20.

In addition, FIG. 22 is another schematic diagram illustrating the implementation of the function configuration of a network node according to an embodiment. As shown in FIG. 22, the AMF, the AMF1 or the AMF2 is located in the CU and is considered as a new node CU-AM in the CU.

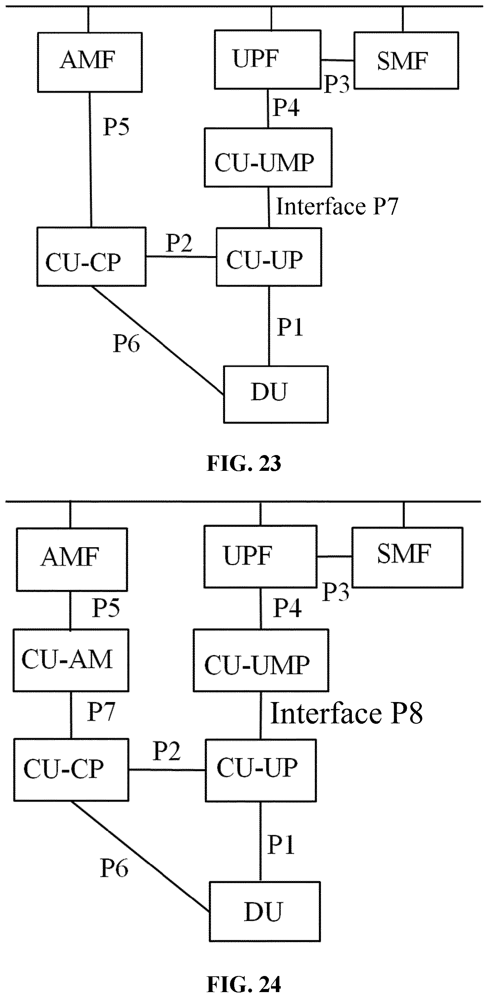

In addition, FIG. 23 is another schematic diagram illustrating the implementation of the function configuration of a network node according to an embodiment. As shown in FIG. 23, the UPF, the UPF1 or the UPF2 is located in the CU and is considered as a new node CU-UMP in the CU.

In addition, FIG. 24 is another schematic diagram illustrating the implementation of the function configuration of a network node according to an embodiment. As shown in FIG. 24, the AMF, the AMF1 or the AMF2 is located in the CU and is considered as a new node CU-AM in the CU, and the UPF, the UPF1 or the UPF2 is located in the CU and is considered as a new node CU-UMP in the CU

In above Embodiments one to four, when the core network node includes a PDCP function, the core network node may only include a partial PDCP function, instead of all PDCP functions. The partial PDCP function specifically includes header compression/packet numbering/packet ordering of the PDCP.

For example, function of header compression/packet numbering/packet ordering of the PDCP is placed in the UPF, and function of ciphering/integrity protection/segmentation/merging is placed in the DU.

In addition, the RRC may also be placed in the DU and transmitted via MAC or in other forms.

Through the above function fusion, the network structure is simplified, the number of interfaces of the access node is reduced, the flexible deployment is improved, and the deployment cost of the access node is lowered.

### Embodiment six

The core network node and the access network node may include the same protocol function, or, different access network nodes may include the same protocol stack. That is, the whole network has a dual protocol stack or a multi-protocol stack (that is, the first network node and the second network node have the same function, and the first network node is an access network node different from the second network node). The protocol stacks of different nodes are selected according to the different functions enabled. For example, the PDCP function or the PDCP protocol may exist in both the core network node and the access network node; when a carrier aggregation (CA) related function is enabled, the PDCP protocol stack of the access network is adopted; when multiple cells are accessed, the PDCP protocol stack of the core network is adopted to manage transmissions of the multiple cells and perform flow control, thereby avoiding unnecessary retransmissions and reducing the transmission delay.

The MAC function or the MAC protocol may exist in multiple access network nodes. Connections are established between MACs of different access network nodes, a dedicated interface is defined, and the MAC information of a certain LTE is then transferred to the MAC of another access network node or between MACs of multiple access network nodes.

The MAC function or the MAC protocol may exist in multiple access network nodes and is responsible for the joint scheduling of multiple nodes.

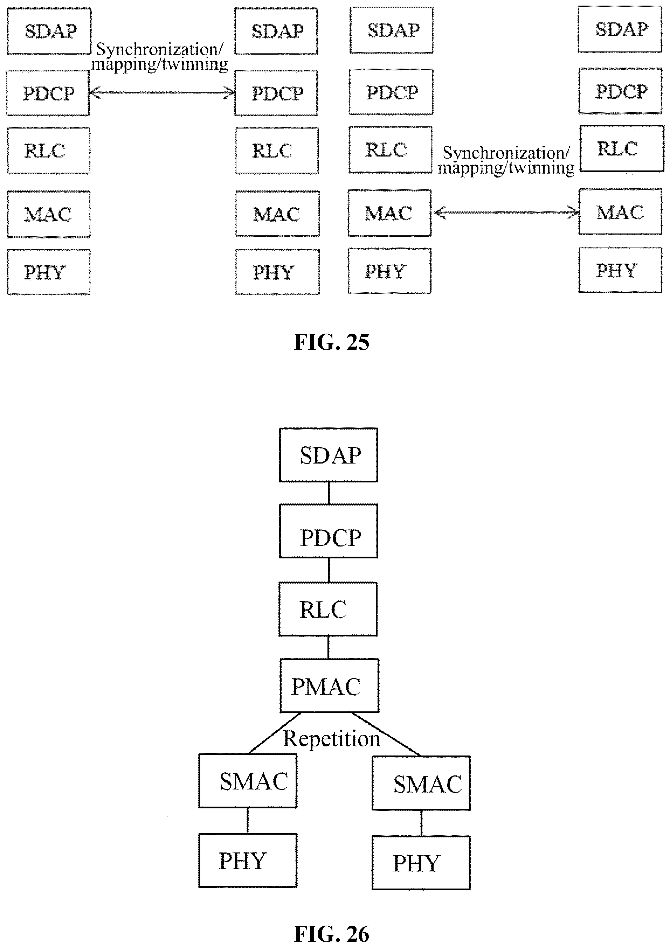

That is, the MAC information or the PDCP information of a user is synchronized (or repeated, mapped or twinned) in multiple nodes (the core network node and/or the access network node). FIG. 25 is a schematic diagram illustrating the implementation of function synchronization, mapping or twinning between a first network node and a second network node according to an embodiment. As shown in FIG. 25, the synchronization is to transmit the MAC information or the PDCP information of a user of one node to multiple nodes via an interface (the original node and the target node are equal to each other, and there is no master node). The mapping is to map the MAC information or the PDCP information of a user of one node to another type of information (for example, QoS information, neighboring cell information or flow control information) of another node through form transformation. The twinning is a proxy function, that is, a proxy user may be scheduled, request, respond or give feedback at another node or a node where a proxy user resides may perform information interaction, request or respond at another node. FIG. 26 is a schematic diagram illustrating the implementation of function repetition between a first network node and a second network node according to an embodiment. As shown in FIG. 26, the repetition is to transmit the MAC information or the PDCP information of a user to multiple nodes through a master node. In FIG. 26, the PMAC may serve as the master node to transmit the MAC information and the PHY information of a user to multiple nodes. In this manner, the multiple nodes may jointly perform downlink transmission and/or uplink reception on the UE.

Through the above function fusion, the flexible of the network is improved.

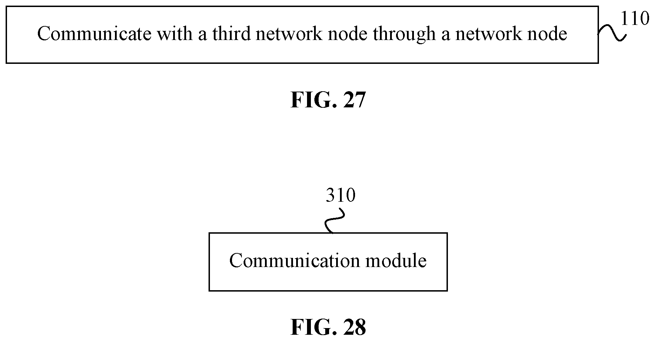

FIG. 27 is a flowchart of a communication method according to an embodiment. As shown in FIG. 27, the method provided in the embodiment may be applied to the network node provided by the embodiments of the present application. The method includes step 110.

In step 110, a third network node is communicated with through the network node.

In the above embodiment, the network node may refer to the new network node including a first preset function of a first network node and a second preset function of a second network node provided in the embodiments described above. The first network node and the second network node are different network nodes. The second network node includes an access network node. The third network node may refer to a node that communicates with the new network node. For example, the third network node may be the new network node provided by the embodiments described above, or may be a common network node which is not the new network node included in the present application, such as an AMF, a CU, or a DU. The third network node may be a core network node or may be an access network node.

In the above embodiment, by setting a new network node including both the first preset function of the first network node and the second preset function of the second network node, where the second network node includes an access network node, and the first network node and the second network node belong to different network nodes, the new network node is enabled to have the functions of multiple network nodes; on the basis of the above, the third network node is communicated with through such new network node, thereby improving the deployment flexibility of the wireless network.

In an embodiment, the first network node includes a core network node.

In an embodiment, the first preset function includes a preset AMF.

In an embodiment, the preset AMF includes: at least one of NAS signaling termination, NAS signaling security, AS security control, access authentication, access authorization, mobility management control, or network slicing.

In an embodiment, the first preset function includes a preset UPF.

In an embodiment, the preset UPF includes: one or more of packet routing & forwarding, packet inspection and a user plane part of policy rule enforcement, traffic usage reporting, an uplink classifier, QoS handling for the user plane, uplink traffic verification, or downlink packet buffering and downlink data notification triggering.

In an embodiment, the second preset function includes one or more of a preset CP function or a preset UP function.

In an embodiment, the preset CP includes RRC.

In an embodiment, the preset UP function includes one or more of SDAP or PDCP.

In an embodiment, the core network node has the second present function.

In an embodiment, the AMF of the core network node or the UPF of the core network node has the second preset function.

In an embodiment, the AMF of the core network node and the UPF of the core network node have different second preset functions.

In an embodiment, the AMF includes multiple function sub-nodes, and a certain function sub-node has the second preset function.

In an embodiment, the UPF has multiple function sub-nodes, and a certain function sub-node has the second preset function.

In an embodiment, the second network node has the first preset function.

In an embodiment, the control plane of the second network node includes a first function layer. The first function layer includes one of a NAS management layer, a management layer, an access management layer, or a mobility management layer.

In an embodiment, the user plane of the second network node includes a second function layer. The second function layer includes one of a QoS management layer, a user management layer, an uplink management layer, or a routing management layer.

In an embodiment, the first network node and the second network node have the same function.

In an embodiment, the first network node is an access network node different from the second network node, and the first network node and the second network node have the same function.

In an embodiment, the same function includes one or more of a PDCP function or a MAC function.

In an embodiment, the same function is synchronized, mapped, repeated or twinned between the first network node and the second network node.

In an embodiment, the UPF of the network node includes a preset SMF.

In an embodiment, the preset SMF includes at least one of selection and control of the UPF, traffic steering at the UPF to route traffic to a proper destination, a control part of policy enforcement and QoS, or downlink data notification.

The embodiments of the present application further provide a communication apparatus. FIG. 28 is a structure diagram of a communication apparatus according to an embodiment. As shown in FIG. 28, the communication apparatus includes a communication module 310.

The communication module 310 is configured to communicate with a third network node through a network node.

In the communication apparatus provided in the above embodiment, by setting a new network node including both the first preset function of the first network node and the second preset function of the second network node, where the second network node includes an access network node, and the first network node and the second network node belong to different network nodes, the new network node is enabled to have the functions of multiple network nodes; on the basis of the above, the third network node is communicated with through such new network node, thereby improving the deployment flexibility of the wireless network.

In an embodiment, the first network node includes a core network node.

In an embodiment, the first preset function includes a preset AMF.

In an embodiment, the preset AMF includes: at least one of NAS signaling termination, NAS signaling security, AS security control, access authentication, access authorization, mobility management control, or network slicing.

In an embodiment, the first preset function includes a preset UPF.

In an embodiment, the preset UPF includes: one or more of packet routing & forwarding, packet inspection and a user plane part of policy rule enforcement, traffic usage reporting, an uplink classifier, QoS handling for the user plane, uplink traffic verification, or downlink packet buffering and downlink data notification triggering.

In an embodiment, the second preset function includes one or more of a preset CP function or a preset UP function.

In an embodiment, the preset CP includes RRC.

In an embodiment, the preset UP function includes one or more of SDAP or PDCP.

In an embodiment, the core network node has the second present function.

In an embodiment, the AMF of the core network node or the UPF of the core network node has the second preset function.

In an embodiment, the AMF of the core network node and the UPF of the core network node have different second preset functions.

In an embodiment, the AMF includes multiple function sub-nodes, and a certain function sub-node has the second preset function.

In an embodiment, the UPF has multiple function sub-nodes, and a certain function sub-node has the second preset function.

In an embodiment, the second network node has the first preset function.

In an embodiment, the control plane of the second network node includes a first function layer. The first function layer includes one of a NAS management layer, a management layer, an access management layer, or a mobility management layer.

In an embodiment, the user plane of the second network node includes a second function layer. The second function layer includes one of a QoS management layer, a user management layer, an uplink management layer, or a routing management layer.

In an embodiment, the first network node and the second network node have the same function.

In an embodiment, the first network node is an access network node different from the second network node, and the first network node and the second network node have the same function.

In an embodiment, the function includes one or more of a PDCP function or a MAC function.

In an embodiment, the function is synchronized, mapped, repeated or twinned between the first network node and the second network node.

In an embodiment, the UPF of the network node includes a preset SMF.

In an embodiment, the preset SMF includes at least one of selection and control of the UPF, traffic steering at the UPF to route traffic to a proper destination, a control part of policy enforcement and QoS, or downlink data notification.

The communication apparatus provided in the embodiment and the communication method provided in the embodiments described above belong to the same concept. For technical details not described in detail in the embodiment, reference may be made to any of the embodiments described above, and the above embodiment has the same beneficial effects as the communication method executed.

The embodiments of the present application further provide a storage medium. The storage medium stores a computer program which, when executed by a processor, causes the processor to perform the communication method in any embodiment of the present application. The communication method is applied to the network node in any embodiment of the present application and includes: a third network node is communicated with through the network node.

The computer storage medium in the embodiments of the present application may adopt any combination of one or more computer-readable media. The computer-readable medium may be a computer-readable signal medium or a computer-readable storage medium. The computer-readable storage medium may be, but is not limited to, an electrical, magnetic, optical, electromagnetic, infrared or semiconductor system, apparatus or device, or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory, a magnetic memory or any suitable combination thereof. The computer-readable storage medium may be any tangible medium that can contain or store a program for use by or in connection with an instruction execution system, apparatus or device.

The computer-readable signal medium may include a propagated data signal with computer-readable program codes embodied therein, for example, in a baseband or as a part of a carrier wave. The data signal propagated may be in multiple forms, including but not limited to an electromagnetic signal, an optical signal or any suitable combination thereof. The computer-readable signal medium may be any computer-readable medium that is not a computer-readable storage medium and can communicate, propagate or transport a program for use by or in connection with an instruction execution system, apparatus or device.

The program codes included in the computer-readable medium may be transmitted in any suitable medium including, but not limited to, a wireless medium, a wire, an optical cable, a radio frequency (RF) or any suitable combination thereof.

Computer program codes for performing the operations of the present application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of the present application and are not intended to limit the scope of the present application.

It is to be understood by those skilled in the art that the term "user terminal" covers any suitable type of wireless user device, for example, a mobile phone, a portable data processing apparatus, a portable web browser or a vehicle-mounted mobile station.

Generally speaking, the embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM and an optical memory device and system (a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A network node, comprising a first preset function of a first network node and a second preset function of a second network node, wherein the first network node and the second network node are different network nodes, and the second network node comprises an access network node.

2. The network node according to claim 1, wherein the first network node comprises a core network node.

3. The network node according to claim 2, wherein the first preset function comprises a preset access and mobility management function (AMF).

4. The network node according to claim 3, wherein the preset AMF comprises:
at least one of non-access stratum (NAS) signaling termination, NAS signaling security, access stratum security control, access authentication, access authorization, mobility management control, or network slicing.

5. The network node according to claim 2, wherein the first preset function comprises a preset user plane function (UPF).

6. The network node according to claim 4, wherein the preset UPF comprises:
at least one of packet routing and forwarding, packet inspection and a user plane part of policy rule enforcement, traffic usage reporting, an uplink classifier, quality of service (QoS) handling for a user plane, uplink traffic verification, or downlink packet buffering and downlink data notification triggering.

7. The network node according to claim 2, wherein the second preset function comprises at least one of a preset control plane (CP) function or a present user plane (UP) function.

8. The network node according to claim 7, wherein the preset CP function comprises radio resource control.

9. The network node according to claim 7, wherein the preset UP function comprises at least one of service data adaptation protocol or packet data convergence protocol (PDCP).

10. The network node according to claim 2, wherein the core network node has the second present function.

11. The network node according to claim 10, wherein an AMF of the core network node or a UPF of the core network node has the second preset function.

12. The network node according to claim 10, wherein an AMF of the core network node and a UPF of the core network node have different second preset functions.

13. The network node according to claim 10, wherein an AMF comprises a plurality of function sub-nodes, wherein one function sub-node among the plurality of function sub-nodes has the second preset function.

14. The network node according to claim 10, wherein a UPF comprises a plurality of function sub-nodes, wherein one function sub-node among the plurality of function sub-nodes has the second preset function.

15. The network node according to claim 2, wherein the second network node has the first preset function.

16. The network node according to claim 15, wherein a control plane of the second network node comprises a first function layer, wherein the first function layer comprises one of: a NAS management layer, a management layer, an access management layer, or a mobility management layer.

17. The network node according to claim 15, wherein a user plane of the second network node comprises a second function layer, wherein the second function layer comprises one of: a QoS management layer, a user management layer, an uplink management layer, or a routing management layer.

18. The network node according to claim 2, wherein the first network node and the second network node have a same function.

19. The network node according to claim 1, wherein the first network node is an access network node different from the second network node, and the first network node and the second network node have a same function.

20. The network node according to claim 18 or 19, wherein the same function comprises at least one of a PDCP function or a medium access control (MAC) function.

21. The network node according to claim 18 or 19, wherein the same function is synchronized, mapped, repeated or twinned between the first network node and the second network node.

22. The network node according to claim 1, wherein a UPF of the network node comprises a preset session management function (SMF).

23. The network node according to claim 22, wherein the preset SMF comprises at least one of selection and control of a UPF, traffic steering at a UPF to route traffic to a proper destination, a control part of policy enforcement and QoS, or downlink data notification.

24. A communication method, applied to the network node according to any one of claims 1 to 23 and comprising: communicating with a third network node through the network node.

25. A storage medium storing a computer program which, when executed by a processor, causes the processor to implement the communication method according to claim 24.
